# EUROPEAN PATENT APPLICATION

(11) **EP 4 054 279 A1**
(43) Date of publication of application: **07.09.2022**
(21) Application number: 19950733.6
(22) Date of filing: 01.11.2019
(51) Int. Cl.: H04W 76/14, H04W 88/04

(54) **TERMINAL AND WIRELESS COMMUNICATION METHOD**

(71) Applicant: NTT DOCOMO, INC., Chiyoda-Ku Tokyo 100-6150 (JP)
(72) Inventor: YOSHIOKA, Shohei, Tokyo 100-6150 (JP); KUMAGAI, Shinya, Tokyo 100-6150 (JP); NAGATA, Satoshi, Tokyo 100-6150 (JP)
(74) Representative: Hoffmann Eitle
(86) International application number: PCT/JP2019/043131
(87) International publication number: WO 2021/084754

(57) **Abstract**

An aspect of a terminal according to the present disclosure includes a transmitting/receiving section that transmits and/or receives a signal to and from a network, and a control section that performs a specific function of a base station on the basis of a notification from the network to control transmission and/or reception in a second terminal that is different from the terminal.

## Description

### Technical Field

The present disclosure relates to a terminal and a radio communication method in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (referred to as, for example, "5th generation mobile communication system (5G)," "5G+ (plus)," "New Radio (NR)," "New radio access (NX)," "Future generation radio access (FX)," "3GPP Rel. 15 (or later versions)", and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, 5G or NR), a plurality of communications (also referred to as use cases, services, communication types, or the like) are expected that are different in a requirement (communication requirement) such as high speed and high capacity (for example, eMBB: enhanced Mobile Broad Band), ultra large number of terminals (for example, mMTC: massive Machine Type Communication), and ultra-reliable and low latency (for example, URLLC: Ultra Reliable Communications), for example. Note that the requirement relates to, for example, at least one of latency, reliability, capacity, speed, and performance.

In such future radio communication systems, it is conceivable to deploy many base stations to provide cells corresponding to the different services or communication requirements.

However, in the case of deploying many base stations, connections between the base stations, base station facilities, deployment locations, or the like increase, which may increase costs for providing a network.

As such, the present disclosure has an object to provide a terminal and radio communication method capable of achieving provision of a network at a low cost.

### Solution to Problem

A terminal according to an aspect of the present disclosure includes a transmitting/receiving section that transmits and/or receives a signal to and from a network; and a control section that performs a specific function of a base station on the basis of a notification from the network to control transmission and/or reception in a second terminal that is different from the terminal. Advantageous Effects of Invention

According to an aspect of the present disclosure, provision of a network can be achieved at a low cost.

### Brief Description of Drawings

FIG. 1 is a diagram to show an example of a current network design;
FIG. 2 is a diagram to show an example of a case of deploying base stations depending on services or a requirements;
FIG. 3 is a diagram to show an example of a network in a case of introducing a captain UE;
FIG. 4 is a diagram to show an example of a base station function the captain UE has;
FIG. 5 is a diagram to show another example of the base station function the captain UE has;
FIG. 6 is a diagram to show an example of a schematic structure of a radio communication system according to one embodiment;
FIG. 7 is a diagram to show an example of a structure of a base station according to one embodiment;
FIG. 8 is a diagram to show an example of a structure of a user terminal according to one embodiment; and
FIG. 9 is a diagram to show an example of a hardware structure of the base station and the user terminal according to one embodiment.

### Description of Embodiments

### <Network Design>

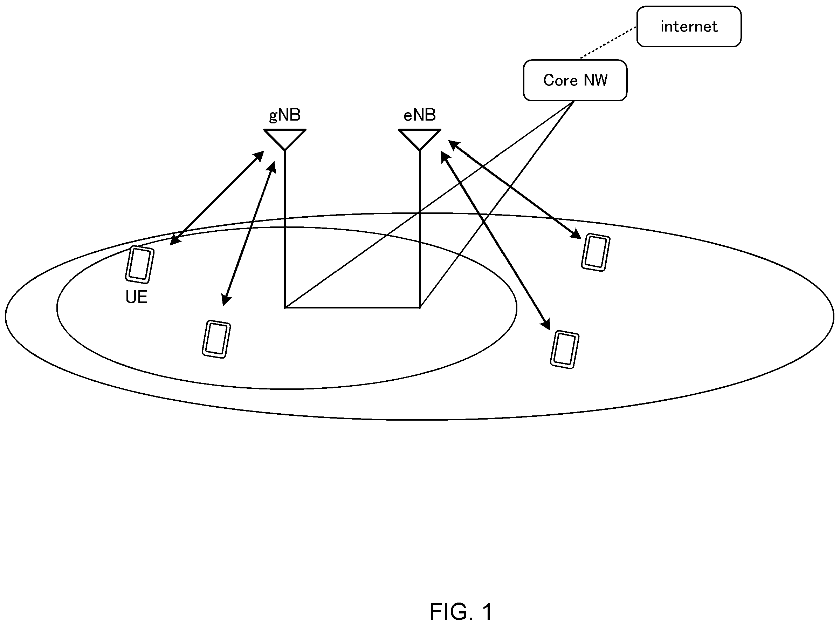

FIG. 1 is a diagram to show an example of a current (for example, Rel. 15) network design (NW design). Here, a case is shown that a first base station (LTE eNB) providing an LTE communication and a second base station (NR gNB) providing an NR communication form cells to communicate with terminals (hereinafter, also referred to as UEs) in the respective cells.

The first base station may use a given frequency band (for example, at least one of 700 MHz, 800 MHz, 1.5 GHz, 1.8 GHz, 2.1 GHz, and 3.5 GHz) to control the communication with the UE. The second base station may use another frequency band (for example, at least one of 3.7 GHz, 4.5 GHz, and 28 GHz) to control the communication with the UE.

Each base station may be connected to a core network directly (or through another base station). For example, the core network may include at least one of Evolved Packet Core (EPC), 5G Core Network (5GCN), Next Generation Core (NGC), and so on. The core network may be connected to an external network such as the Internet. The UE may be a terminal supporting at least one of communication schemes such as LTE, LTE-A, and 5G.

A network operator (NW operator) deploys everywhere the first base station and the second base station to provide communications.

In the future radio communication systems, it is conceivable to provide a service such as a machine type communication implementing multiple simultaneous connections (for example, massive Machine Type Communications (mMTC), Internet of Things (IoT)) and D2D (Device to Device) for the terminals to communicate with each other directly without through the base station.

In the future radio communication systems, a traffic type (also referred to as service type, communication type, use case, or the like) is conceivable such as further enhancement of mobile broadband (for example, enhanced Mobile Broadband (eMBB)), and high reliable and low latency communication (for example, Ultra-Reliable and Low-Latency Communications (URLLC)). For example, URLLC requires smaller latency and higher reliability than eMBB.

In a specific traffic type (for example, URLLC), it is conceivable that a requirement is different depending on a service to be provided (for example, gaming, virtual reality (XR)).

In the future radio communication systems, it is conceived to use a higher frequency range to perform communication. For example, a frequency range exceeding 52.6 GHz (FR4) may be used. In the future radio communication systems, in order to respond to a user demand, it may be desired to more rapidly provide a NW meeting the demand.

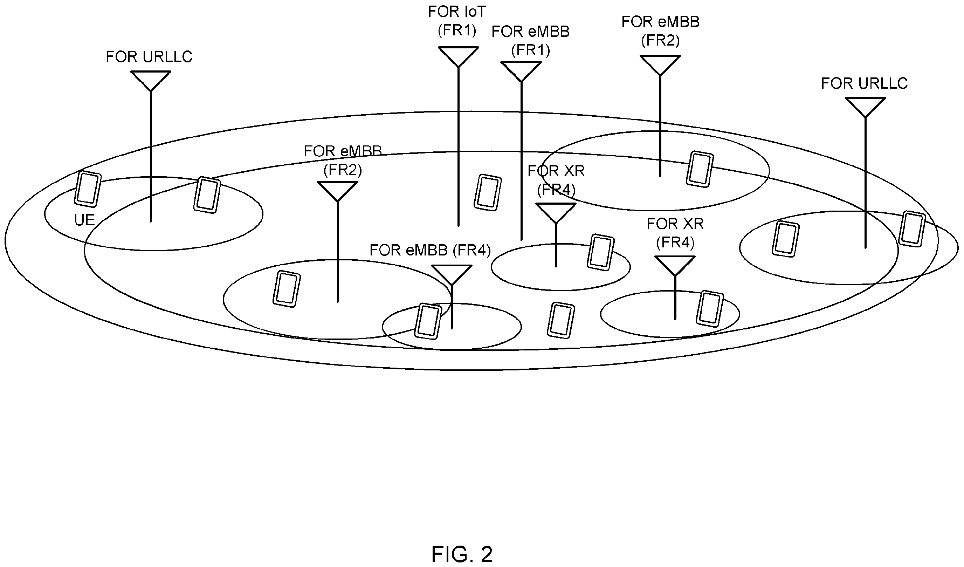

In a case that the current NW design (for example, a base station deployment depending on a service or a communication requirement) is used without change, it is conceivable to deploy many base stations to provide cells corresponding to different services or communication requirements (see FIG. 2).

FIG. 2 is a diagram to show an example of a case of deploying the base stations depending on the different services or communication requirements. As shown in FIG. 2, in the case of deploying many base stations, connections between the base stations, base station facilities, deployment locations, or the like also increase, and manpower required for the deployment increases, which may increase a cost for providing a network.

The inventors of the present invention, in order to suppress the increase of the deployed base stations, focused on providing a base station function to a specific terminal, studied a method or a network design capable of providing a network at a low cost, and came up with the idea of the invention of the present application.

Hereinafter, embodiments according to the present disclosure will be described in detail with reference to the drawings. Structures shown in respective embodiments may each be employed individually, or may be employed in combination. Note that a communication system to which the present embodiments can be applied is not limited. In the following description, transmission/reception refers to at least one of transmission and reception, and transmission/reception may be interpreted as transmission, reception, or transmission and reception.

### (First Aspect)

In a first aspect, described is a case that a function the base station has (hereinafter, also referred to as a base station function) is provided to a specific terminal.

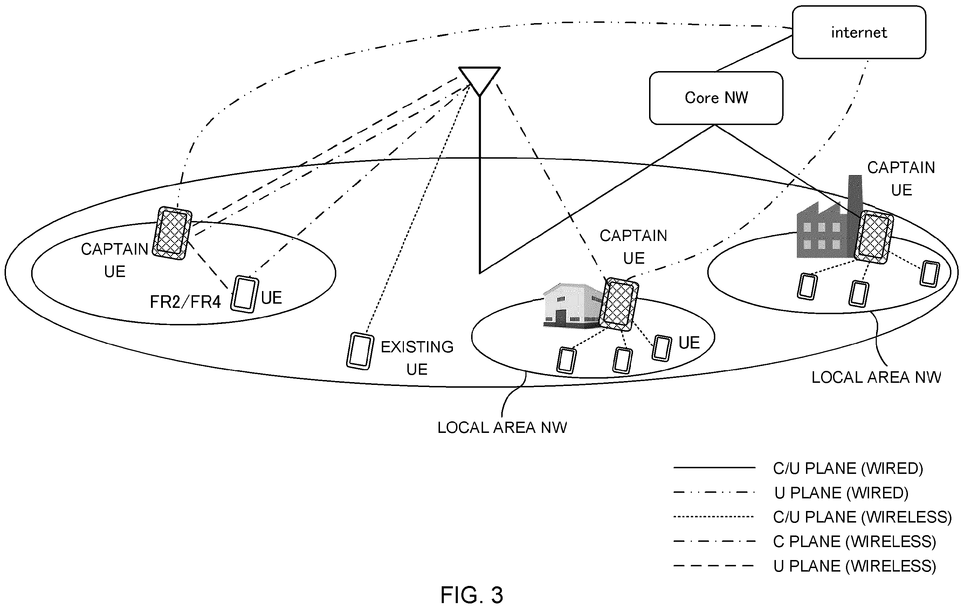

FIG. 3 is a diagram to show an example of a case that at least part of the base station function is provided to the specific terminal. The terminal having the base station function (for example, at least part of the base station function) may be referred to as a captain UE, a Captain-UE, a special UE, or the like. Note that the UE having the base station function and performing the base station function may be referred to as the captain UE.

On the other hand, the UE not having the base station function (or, the UE not performing the base station function) may be referred to as another UE, a normal UE, or the like.

The captain UE may be configured, similar to the UE not supporting the base station function or the UE not performing the base station function (hereinafter, also referred to as another UE), to communicate with the base station. For example, at least one of user data (U plane) and a control signal (C plane) may be wirelessly transmitted/received between the captain UE and the base station.

The captain UE may be connected to the core network and the external network (for example, the Internet or the like) by using at least one of wire and radio. At least one of the user data (U plane) and the control signal (C plane) may be transmitted/received by radio between the captain UE and another UE. For example, only the U plane may be transmitted/received by radio, or both the U plane and the C plane may be transmitted/received by radio, between the captain UE and another UE.

The captain UE may control whether to adopt (for example, perform/stop, enable/disable, or activate/deactivate) the base station function on the basis of a notification from the network (for example, the base station). The notification from the network may be made using at least one of higher layer signaling and downlink control information. The captain UE may determine the base station function to adopt on the basis of the notification from the network or a given condition.

Note that in a case that a specific condition is met, whether to adopt the base station function may be controlled even if no notification is made from the network. For example, the specific condition may be a case that emergency information (of disaster or the like, for example) is received from other than the network.

The captain UE may control whether to adopt a base station UE by using a timer. The timer control (for example, start timing, expiration timing, or the like) may be predefined by a specification, or configured by the network (for example, the base station).

The captain UE may use a specific radio resource to form an area for providing a specific service. The radio resource may be a frequency resource, a time resource, or a combination of a frequency resource and a time resource.

Information related to the specific radio resource may be predefined by a specification, or notified from the network (for example, the base station) to the captain UE and another UE through higher layer signaling or the like. Alternatively, the captain UE may notify the information for the specific radio resource to another

### UE.

Such another UE may control transmission/reception of the specific radio resource or the specific service on the basis of an indication from the captain UE. On the other hand, such another UE may control the transmission/reception of other radio resources or other services on the basis of an indication from the base station.

The captain UE may control at least one of transmission and reception (hereinafter, referred to as transmission/reception) of another UE. For example, the captain UE may control at least one of operations of another UE described below.

Another UE operation 1: a case that data transmission/reception of another UE is performed to and from the base station via the captain UE by radio.
Another UE operation 2: a case that data transmission/reception of another UE is performed to and from the base station without via the captain UE by radio.
Another UE operation 3: a case that data transmission/reception of another UE is performed via the captain UE by wire.
Another UE operation 4: a case that communication between other UEs is directly performed

Note that the data may be interpreted as at least one of UL-SCH, DL-SCH, SL-SCH, PUSCH, PDSCH, and PSSCH.

The captain UE may receive information related to another UE performing control by use of the base station function (for example, an identifier of another UE, or the like) from the network (for example, the base station). Alternatively, the captain UE may determine another UE performing control by use of the base station function on the basis of a reception condition of signal or data transmitted from another UE.

### <Another UE Operation>

Another UE, in a case of connecting to the captain UE, may control the communication on the basis of an indication from the captain UE. On the other hand, another UE, in a case of not connecting to the captain UE, may control the communication on the basis of an indication from the base station.

Another UE may receive information related to the captain UE (for example, information of the captain UE to connect) from the base station through at least one of higher layer signaling and downlink control information. Alternatively, another UE may determine the captain UE to connect on the basis of a given signal transmitted from the captain UE. The number of captain UEs to which another UE connects may be limited to one, or may be multiple.

Another UE connecting to the captain UE, in a case of receiving an indication from the base station, may prioritize any one of the indications from the captain UE and the base station, and ignore (or, drop) the other indication. Which one of the indications from the captain UE and the base station is prioritized may be predefined by a specification, or may be notified from the network (for example, the base station) to another UE (and the captain UE).

Alternatively, another UE may determine which one of the indications from the captain UE and the base station is prioritized, on the basis of the indicated information class or information type captain UE. A priority of the information type may be predefined by a specification, or may be notified from the network (for example, the base station) to another UE (and the captain UE).

Each UE may report whether to have the base station function (or, whether the UE can be the captain UE) to the network (for example, the base station). The UE having the base station function may report contents of the base station function the UE has (for example, layer, function level, or the like). Another UE may report whether to support the communication with the captain UE (whether to be capable of transmission/reception between the captain UE and another UE) to the network (for example, the base station).

### <Base Station Function>

The base station function the captain UE has is a function related to communication control of another UE. For example, the base station function may be at least one of the followings.

### [Physical Layer Function]

The captain UE may perform at least one of transmission of broadcast information (or system information), reception of a random access channel, and transmission of a random access response.

For example, the captain UE, in a case of receiving a random access preamble (for example, PRACH) transmitted from another UE, may control a random access procedure (message 2 or later) of such another UE. At this time, the captain UE may control the random access procedure via the base station.

### [MAC Layer Function]

The captain UE may perform at least one of multiplexing (or mapping) of a logical channel, HARQ retransmission control, scheduling of at least one of DL, UL, and SL, and multiplexing/demultiplexing of data across a plurality of cells (or CC).

### [RLC Layer Function]

The captain UE may perform at least one of division of data, concatenation of data, retransmission control, duplicated data detection, and ordered delivery to a higher order layer.

### [PDCP Layer Function]

The captain UE may perform at least one of encryption, reconstruction, ordered delivery, removal of duplicated data in handover, and PDCP packet duplication.

### [RRC Layer/SDAP Layer Function]

The captain UE may perform at least one of RRC parameter determination, RRC parameter provision, RRC connection management, cell selection, cell reselection, higher layer measurement configuration, UE capability handling, and paging message transmission.

### (Second Aspect)

In a second aspect, a case that the captain UE controls the base station function to adopt (or support) on the basis a given condition is described.

The captain UE may change the base station function to support depending on a state (or a communication state, a communication method) of the captain UE. The state of the captain UE may be a state of the captain UE in data transmission/reception of another UE, for example, a role or an operating method performed by the captain

### UE.

In a case that the state of the captain UE is a first state, the captain UE may support a first base station function, or in a case that the state of the captain UE is a second state, the captain UE may support a second base station function.

### <First Base Station Function>

In the case that the data transmission/reception of another UE is performed to and from the base station via the captain UE by radio, the captain UE may support the first base station function. In the case that the data transmission/reception of another UE is performed to and from the base station without via the captain UE by radio, the captain UE may support the first base station function.

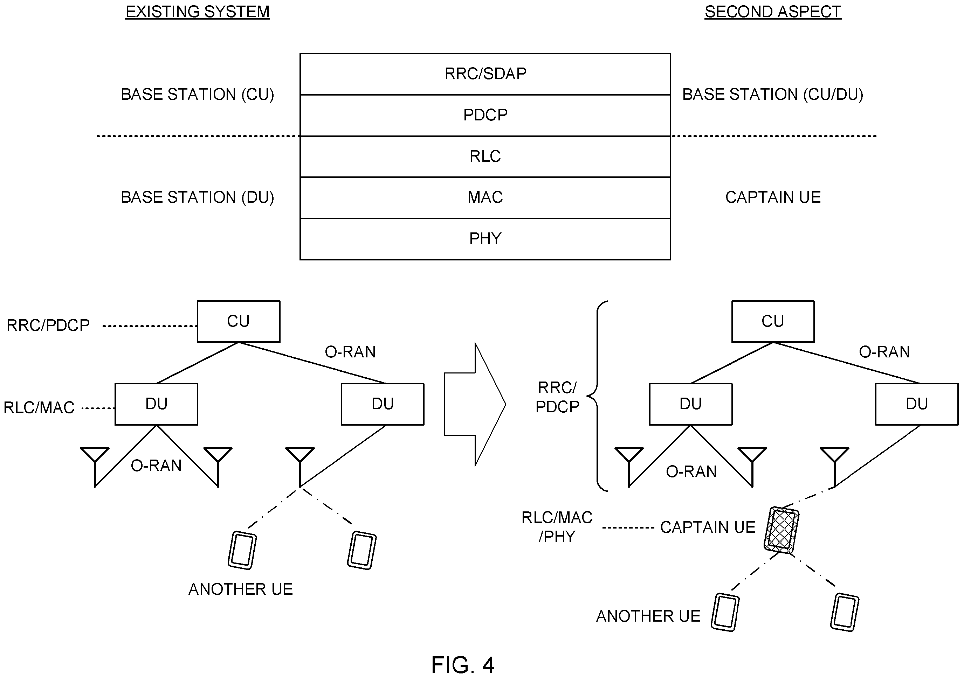

FIG. 4 shows an example of the base station function in the case that the data transmission/reception of another UE is performed to and from the base station via the captain UE by radio. In the existing system, another UE is connected to the base station, whereas in the second aspect, another UE may be connected to the base station via the captain UE by radio.

The base station may be connected to a distributed node (DU), and the distributed node may be connected to a central node (CU). Here, a case is shown that the central node and the distributed node are connected by an open RAN (O-RAN), without limitation.

FIG. 4 shows a case that the first base station function is a (part of) function to control the RLC layer, the MAC layer, and the physical layer. In this case, the base station may be configured to perform control for the RRC layer, the Service Data Adaptation Protocol (SDAP) layer, and the Packet Data Convergence Protocol (PDCP) layer, the captain UE may be configured to perform (part of) control related to the Radio Link Control (RLC) layer, the MAC layer, and the physical layer.

For example, in a case of scheduling another UE (for example, resource allocation), information for a radio resource set (or one or more radio resource candidates) is notified to or configured for another UE from the base station. Information related to a specific radio resource included in the radio resource set may be notified from the captain UE to another UE. In other words, another UE may use the information (for example, higher layer signaling or the like) notified from the base station and the information (for example, downlink control information) notified from the captain UE to control the transmission/reception.

This makes it possible to control part of the schedule by using the captain UE having the base station function, which allows the communication to be flexibly controlled. As a result, increasing the number of deployed base stations can be suppressed to provide a network at a low cost.

Note that FIG. 4 shows the case that the function of the distributed node (DU) in the existing system (for example, Rel. 15), as the first base station function, is performed by the captain UE, without limitation.

### <Second Base Station Function>

In the case that the data transmission/reception of another UE is performed via the captain UE by wire, the captain UE may support the second base station function. Alternatively, in the case that communication between other UEs is directly performed, the captain UE may support the second base station function.

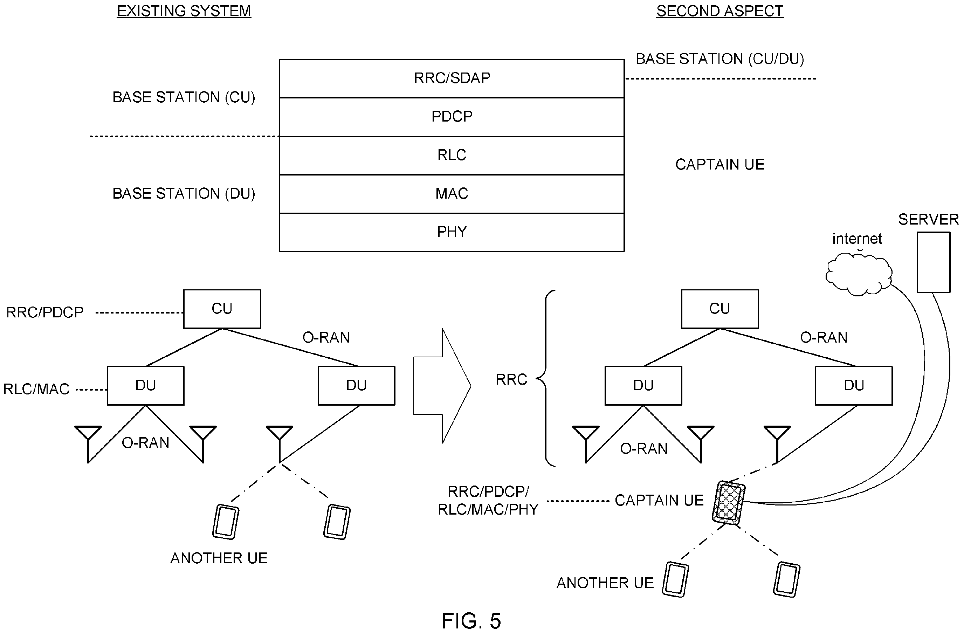

FIG. 5 shows an example of the base station function in the case that the data transmission/reception of another UE is performed via the captain UE by wire. Here, a case is shown that the data transmission/reception of another UE is performed via the captain UE by wire to and from an external network (for example, the Internet) or a server.

In the existing system, another UE is connected to the base station, whereas in the second aspect, another UE may be connected to the Internet or the server via the captain UE by wire. The base station may be connected to a distributed node (DU), and the distributed node may be connected to a central node (CU). Here, a case is shown that the central node and the distributed node are connected by an open RAN (O-RAN), without limitation.

FIG. 5 shows a case that the second base station function is a (part of) function to control part of the RRC layer and the SDAP layer, the PDCP layer, the RLC layer, the MAC layer, and the physical layer. In this case, the base station may be configured to perform control related to part of the RRC layer and the SDAP layer, the captain UE may be configured to perform (part of) control related to the PDCP layer, the RLC layer, the MAC layer, and the physical layer.

For example, in the case of scheduling another UE (for example, resource allocation), both the information related to a radio resource set (or one or more radio resource candidates) and the information related to a specific radio resource included in the radio resource set may be notified from the captain UE to another UE. In other words, another UE may use the information (for example, higher layer signaling and the downlink control information) notified from the captain UE to control the transmission/reception.

This makes it possible to control the schedule by using the captain UE having the base station function, which allows the communication to be flexibly controlled. As a result, increasing the number of deployed base stations can be suppressed to provide a network at a low cost.

Note that FIG. 5 shows the case that the functions of the central node (CU) and the distributed node (DU) in the existing system (for example, Rel. 15), as the first base station function, are performed by the captain UE, without limitation.

Alternatively, the base station function the captain UE adopts or supports may be specified from the network (or the base station). In this case, the base station may notify another UE of at least one of information related to a captain UE to connect, information related to a base station function supported by the captain UE, and activation and deactivation of connection with the captain UE.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

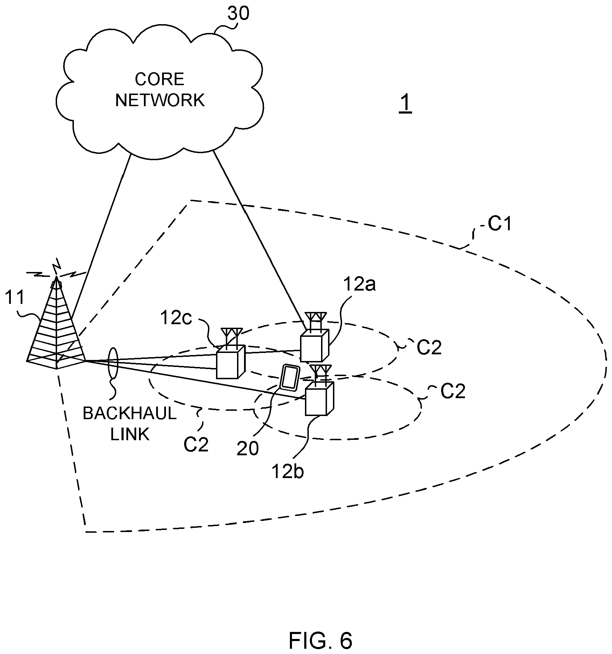

FIG. 6 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

Note that respective base stations 11 and 12a to 12c may be managed by different business operators. Alternatively, the base station 11 and the base station 12a may be managed by the same business operator, and the base stations 12b and 12c may be managed by a different business operator(s). The base station 11 may manage a licensed NW, and the respective base stations 12a to 12c may local NWs.

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on. The user terminal 20 may function as the captain UE. In such a case, the user terminal as the captain UE may adopt a specific base station function to control communication of other user terminals.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

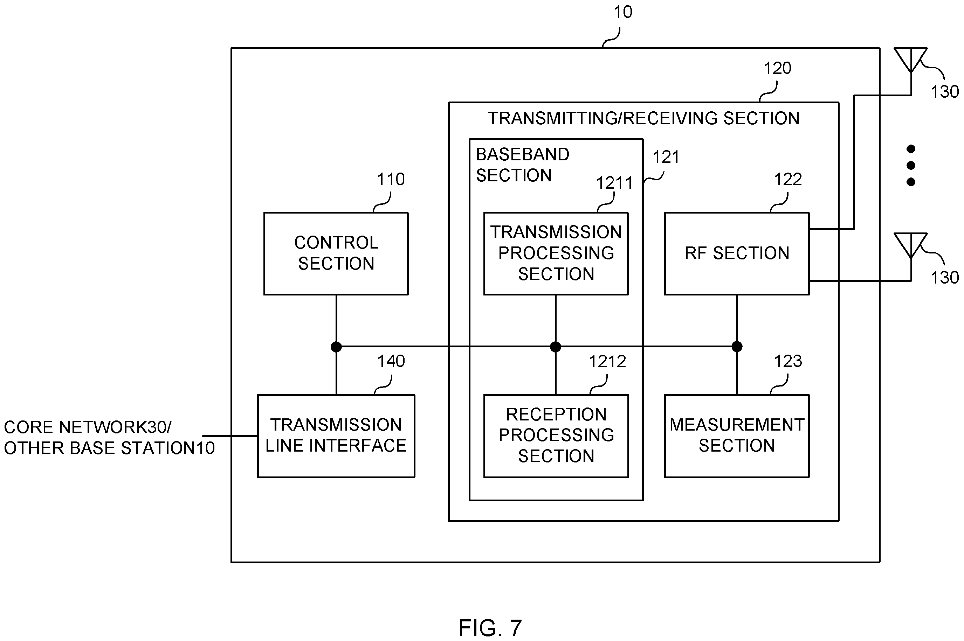

FIG. 7 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140. The UE (captain UE) having the base station function may include at least part of components of the base station described below.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, data and control information and the like acquired from the control section 110, and may generate a bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 performs at least one of reception of signal transmitted from the UE (captain UE) having the base station function, and transmission of signal to the captain UE.

The control section 110 may control activation or deactivation of the base station function for the UE (captain UE) having the base station function.

### (User Terminal)

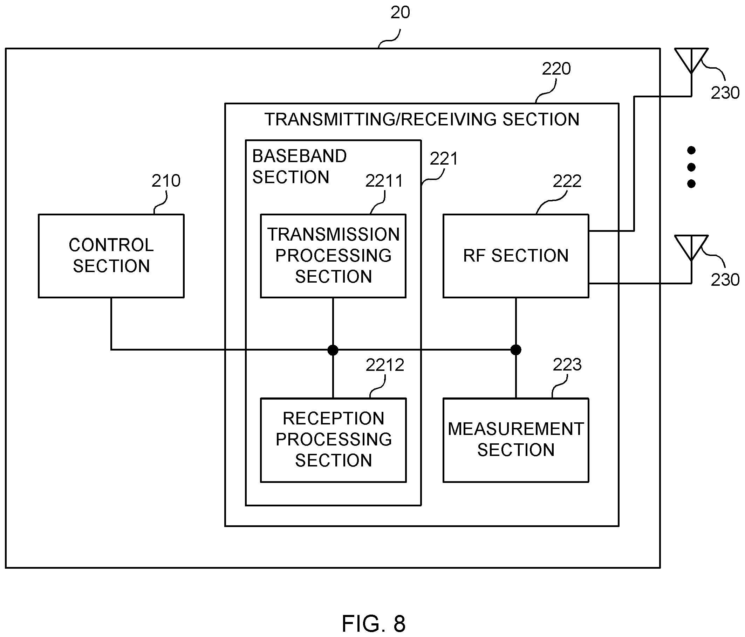

FIG. 8 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230. The UE (captain UE) having the base station function may include at least part of the components of the base station described above.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 transmits and/or receives a signal (for example, at least one of transmission and reception) to and from the network. The transmitting/receiving section 220 may receive information related to the captain UE. The transmitting/receiving section 220 may receive information related to a specific resource used for communication with the captain UE. The transmitting/receiving section 220 may report whether to support the base station function (or the UE capability information).

In a case that the user terminal 20 has the base station function, the transmitting/receiving section 220 may receive at least one of information related to the base station function to adopt and information concerning whether to adopt the base station function (activation/deactivation or the like).

The control section 210 performs a specific function of the base station on the basis of a notification from the network to control transmission/reception in other terminals.

For example, the control section 210 may use a specific radio resource to control the transmission/reception in such other terminals. The specific function may be changed on the basis of a transmission/reception method of such other terminals. The specific function may be differently configured for a case that transmission/reception between such other terminals and the base station is performed by radio and for a case that transmission/reception between such other terminals and the network is performed via a specific terminal (for example, the captain UE) by wire.

The control section 210 may control the signal transmission/reception on the basis of at least one of an indication from the specific terminal (for example, the captain UE) and an indication from the base station.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

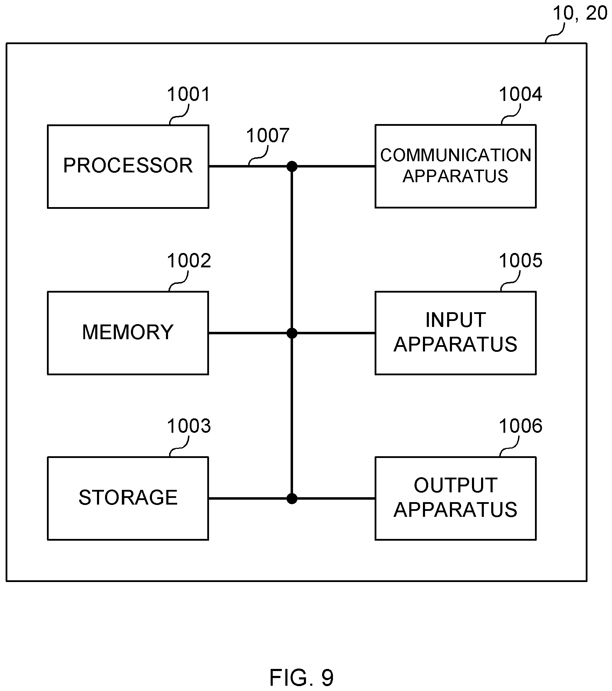

For example, a base station, a user terminal, and so on according to one embodiment of the present disclosure may function as a computer that executes the processes of the radio communication method of the present disclosure. FIG. 9 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a transmitting/receiving section that transmits and/or receives a signal to and from a network; and
a control section that performs a specific function of a base station on the basis of a notification from the network to control transmission and/or reception in a second terminal that is different from the terminal.

2. The terminal according to claim 1, wherein
the control section uses a specific radio resource to control the transmission and/or reception in the second terminal.

3. The terminal according to claim 1 or 2, wherein
the specific function is changed on the basis of a transmission/reception method of the second terminal.

4. The terminal according to claim 3, wherein
the specific function is differently configured for a case that transmission and/or reception between the second terminal and the base station is performed by radio and for a case that transmission and/or reception between the second terminal and the network is performed via the terminal by wire.

5. A terminal comprising:
a transmitting/receiving section that performs signal transmission and/or reception to and from a specific terminal, the specific terminal performing a specific function of a base station on the basis of a notification from a network to control transmission and/or reception in another terminal; and
a control section that controls the signal transmission and/or reception on the basis of at least one of an indication from the specific terminal and an indication from the base station.

6. A radio communication method comprising:
transmitting and/or receiving a signal to and from a network; and
performing a specific function of a base station on the basis of a notification from the network to control transmission and/or reception in a second terminal that is different from the terminal.
